# EUROPEAN PATENT APPLICATION

(11) **EP 4 398 089 A1**
(43) Date of publication of application: **10.07.2024**
(21) Application number: 22946030.8
(22) Date of filing: 30.11.2022
(51) Int. Cl.: G06F 3/14, G06F 3/147

(54) **DATA SYNCHRONIZATION SYSTEM AND METHOD FOR TRAIN**

(30) Priority: 25.11.2022 CN 202211490604
(71) Applicant: CRRC Changchun Railway Vehicles Co., Ltd., Changchun, Jilin 130000 (CN)
(72) Inventor: XU, Jie, Changchun, Jilin 130000 (CN); YANG, Chuan, Changchun, Jilin 130000 (CN); WANG, Huawei, Changchun, Jilin 130000 (CN); LIU, Guoliang, Changchun, Jilin 130000 (CN)
(74) Representative: Behr, Wolfgang
(86) International application number: PCT/CN2022/135293
(87) International publication number: WO 2024/108626

(57) **Abstract**

A data synchronization system and method for a train are provided. The system includes multiple display terminal units, an instruction execution unit, a data synchronization control unit and a transmission channel. The multiple display terminal units include one primary display terminal unit and multiple secondary display terminal units. The primary display terminal unit is configured to send a control instruction and display data, and each of the multiple secondary display terminal units is configured to display data. The data synchronization control unit is configured to: receive a control instruction signal sent by the primary display terminal unit and send the control instruction signal to each of the multiple secondary display terminal units. The instruction execution unit is configured to, after receiving the control instruction signal, execute the control instruction signal, and obtain response data corresponding to the control instruction signal. The data synchronization control unit is further configured to: receive the response data and send the response data to each of the multiple display terminal units. The data synchronization control unit is introduced, achieving data synchronization among the multiple display terminal units.

## Description

This application claims the priority to Chinese Patent Application No. 202211490604.X, titled "DATA SYNCHRONIZATION SYSTEM AND METHOD FOR TRAIN", filed on November 25, 2022 with the China National Intellectual Property Administration, which is incorporated herein by reference in its entirety.

### FIELD

The present disclosure relates to the technical field of data synchronization, and in particular to a data synchronization system and method for a train.

### BACKGROUND

As technology improves by leaps and bounds and transportation means constantly upgrades, people usually choose a train as a transportation means for a long-distance travel. The train is a transportation means travelling on high-speed railways, and is formed by multiple cars. A display terminal device is a crucial device for human-computer interaction on the train. On the one hand, the display terminal device can intelligently control related devices. On the other hand, the display terminal device may display data, such as a state of a device on the train. Therefore, good and reliable operation of the display terminal device is a prerequisite for smooth and stable travelling of the train.

An activation end of the train may be switched, and there is a failure risk during the operation of the display terminal device. Therefore, the train is normally provided with more than one display terminal device, that is, the train is normally provided with multiple display terminal devices. When a device malfunctions or the activation end of the train is switched, primary control switching is performed on the multiple display terminal devices, which can effectively ensure the travelling safety.

Although the train is currently provided with multiple display terminal devices to ensure driving safety, an operational interaction process on the train is an interaction with a current display terminal device, and an operation and an instruction result corresponding to the interaction are not fed back to other display terminal devices. That is, a relevant operation on the current display terminal device for performing a primary control operation cannot be transmitted to an auxiliary display terminal device. As a result, it is impossible for relevant workers on the train to view the corresponding data on different display terminal devices. Therefore, how to address data synchronization among multiple display terminal devices on the train is a problem to be solved urgently.

### SUMMARY

In view of this, a data synchronization system and method for a train are provided according to embodiments of the present disclosure, to achieve data synchronization among multiple display terminal devices on the train.

A data synchronization system for a train is provided according to a first aspect of the embodiments of the present disclosure. The system includes multiple display terminal units, an instruction execution unit, a data synchronization control unit and a transmission channel. The multiple display terminal units include one primary display terminal unit and multiple secondary display terminal units. The primary display terminal unit is configured to send a control instruction and display data, and each of the multiple secondary display terminal units is configured to display data. The data synchronization control unit is configured to: perform data transmission with the multiple display terminal units through the transmission channel, receive a control instruction signal sent by the primary display terminal unit and send the control instruction signal to each of the multiple secondary display terminal units. The instruction execution unit is configured to receive the control instruction signal forwarded by the data synchronization control unit, execute the control instruction signal, and obtain response data corresponding to the control instruction signal. The data synchronization control unit is further configured to: receive the response data sent by the instruction execution unit and send the response data to the multiple display terminal units.

A data synchronization method for a train is provided according to a second aspect of the embodiments of the present disclosure. The method includes: sending, by a primary display terminal unit, a control instruction signal to a data synchronization control unit through a transmission channel; after receiving the control instruction signal, sending, by the data synchronization control unit, the control instruction signal to each of secondary display terminal units and an instruction execution unit; and after the instruction execution unit obtains response data corresponding to the control instruction signal, receiving, by the data synchronization control unit, the response data returned by the instruction execution unit, and sending, by the data synchronization control unit, the response data to the primary display terminal unit and each of the secondary display terminal units.

An electronic device is provided according to a third aspect of the embodiments of the present disclosure. The electronic device includes a memory and a processor. The memory is configured to store executable instructions. The processor is configured to, when executing the executable instructions stored in the memory, perform the data synchronization method for a train according to the embodiments of the present disclosure.

A computer-readable medium is provided according to a fourth aspect of the embodiments of the present disclosure. The computer-readable medium stores executable instructions. The executable instructions, when executed by a processor, perform the data synchronization method for a train according to the embodiments of the present disclosure.

A data synchronization system and method for a train are provided according to the embodiments of the present disclosure. The system includes multiple display terminal units, an instruction execution unit, a data synchronization control unit and a transmission channel. The multiple display terminal units include one primary display terminal unit and multiple secondary display terminal units. The primary display terminal unit is configured to send a control instruction and display data, and each of the multiple secondary display terminal units is configured to display data. The data synchronization control unit is configured to: receive the control instruction sent by the primary display terminal unit and send a control instruction signal to each of the multiple secondary display terminal units, achieving synchronization of the control instruction signal. The instruction execution unit is configured to receive the control instruction signal forwarded by the data synchronization control unit, execute the control instruction signal, and obtain response data corresponding to the control instruction signal. The data synchronization control unit is further configured to: receive the response data sent by the instruction execution unit and send the response data to each of the multiple display terminal units. The data synchronization control unit is introduced, achieving data synchronization among the primary display terminal unit and the multiple secondary display terminal units.

### BRIEF DESCRIPTION OF THE DRAWINGS

In order to illustrate technical solutions in embodiments of the present disclosure or the conventional technology more clearly, drawings to be used in the embodiments or the conventional technology are introduced simply hereinafter. It is apparent that the drawings described below show only some embodiments of the present disclosure. For those skilled in the art, other drawings may be obtained based on the provided drawings without any creative effort.
Figure 1 is a schematic diagram of a data synchronization system for a train according to an embodiment of the present disclosure;
Figure 2 is a topology diagram of a data synchronization system for a train according to an embodiment of the present disclosure; and
Figure 3 is a flow chart for a data synchronization system for a train according to an embodiment of the present disclosure.

### DETAILED DESCRIPTION OF EMBODIMENTS

In order to enable those skilled in the art to better understand the solution of the present disclosure, the technical solutions in the embodiments of the present disclosure are described clearly and completely in conjunction with the drawings in the embodiments of the present disclosure hereinafter. It is apparent that the embodiments described herein are only some embodiments of the present disclosure, rather than all the embodiments. Based on the embodiments of the present disclosure, all other embodiments obtained by those skilled in the art without any creative effort should fall within the protection scope of the present disclosure.

Terms of "first", "second", "third", "fourth" and the like (if any) in the specification, the claims and the drawings of the present disclosure are used to distinguish an object from other similar objects rather than describe a specific order or a sequence. It should be understood that the data used in this way may be interchanged in appropriate situations, so that the embodiments of the present disclosure may be implemented in an order other than those illustrated or described herein. In addition, the terms "include," "comprise", and any other variants thereof are intended to cover the non-exclusive inclusion. For example, a process, method, system, product, or device that includes a list of steps or units is not necessarily limited to those expressly listed steps or units, but may include other steps or units not expressly listed or inherent to such process, method, product, or device.

A display terminal device is a crucial device for human-computer interaction on the train. On the one hand, the display terminal device is configured to intelligently control related devices. On the other hand, the display terminal device is configured to display data of the train. An activation end of the train may be switched during the actual travelling of the train. The activation end of the train is an end where a train driver is located. Moreover, there is a failure risk during the operation of the display terminal device. Therefore, the train is normally provided with more than one display terminal device, that is, the train is normally provided with multiple display terminal devices.

Although the train is currently provided with multiple display terminal devices to ensure travelling safety, an operational interaction process on the train is an interaction with a current display terminal device, and an operation and an instruction result corresponding to the interaction are not fed back to other display terminal devices. Therefore, the multiple display terminal devices on the train display different information, such as experimental information and control information. That is, a relevant operation on the current display terminal device for performing a primary control operation cannot be transmitted to an auxiliary display terminal device. As a result, it is impossible for relevant workers on the train to view the corresponding data on different display terminal devices.

In view of this, a data synchronization system and method for a train are provided according to embodiments of the present disclosure, to achieve data synchronization among the multiple display terminal devices on the train.

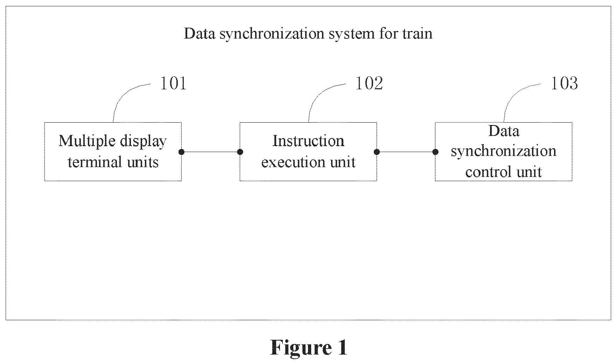

A data synchronization system for a train according to an embodiment of the present disclosure is described in conjunction with a specific embodiment hereinafter. Reference is made to Figure 1, which is a schematic diagram of a data synchronization system for a train according to an embodiment of the present disclosure. The system includes multiple display terminal units 101, an instruction execution unit 102, a data synchronization control unit 103 and a transmission channel.

In related art, multiple display terminal devices on the train include one primary display terminal device and multiple secondary display terminal devices. The primary display terminal device is directly connected to an instruction execution unit of the train, so that the instruction execution unit directly executes a control instruction from the primary display terminal device, and the primary display terminal device receives response data from the instruction execution unit. As a backup device, the secondary display terminal device neither displays the above control instruction nor receives the above response data.

In the present disclosure, the multiple display terminal units include one primary display terminal unit and multiple secondary display terminal units. The primary display terminal unit is configured to send a control instruction and display data. Each of the multiple secondary display terminal units is configured to display data.

The primary display terminal unit according to the present disclosure is still a primary control device for human-computer interaction, and is configured to send a corresponding control instruction and display relevant data. The primary display terminal device is a data source and sender of the control instruction, which can control the devices on the train by sending the control instruction, and timely display states and other data of the devices on the train by displaying the relevant data. The primary display terminal unit may be arranged in a cab at the activation end of the train, so that relevant workers in the cab can perform corresponding human-machine interaction.

The secondary display terminal device in the present disclosure cannot control the devices on train, but can display relevant data, that is, the secondary display terminal device can timely display the states and other data of the devices on the train by displaying the relevant data. The number of the secondary display terminal unit is flexibly determined based on a specific vehicle configuration.

As described above, in related art, the primary display terminal is directly connected to the instruction execution unit for data communication. In order to achieve data synchronization among multiple primary display terminals of the train, the data synchronization system includes the data synchronization control unit. The data synchronization control unit performs data transmission with the multiple display terminal units through the transmission channel. The data synchronization control unit is configured to receive a control instruction signal sent by the primary display terminal unit and send the control instruction signal to each of the secondary display terminal units.

The data synchronization control unit has functions of centralized processing and unified forwarding of the data. After obtaining the control instruction signal, the primary display terminal unit sends the control instruction signal to the data synchronization control unit rather than directly send the control instruction signal to the instruction execution unit, so that the data synchronization control unit sends the control instruction signal to all the secondary display terminal units, thereby achieving synchronization of the control instruction signal among the multiple display terminal units of the train.

In some embodiments, in practical use of the train, as the primary control display terminal unit on the train is frequently switched, the data synchronization control unit is provided to assign display terminal units as the primary display terminal unit and the secondary display terminal units. In order to achieve stable control of the train, the number of the primary display terminal unit on the train may be only one, avoiding a problem of disordered control of the train caused by multiple primary display terminal units on the train.

In some embodiments, considering the safety and reliability of data synchronization of the train, the data synchronization control unit is provided with a power device, for example, a battery. The power device, for example, the battery, can support storage of data for a short time when the train is powered off accidentally, thereby enabling the data synchronization control unit with power-off storage capabilities.

The instruction execution unit is configured to receive the control instruction signal forwarded by the data synchronization control unit, execute the control instruction signal, and obtain response data corresponding to the control instruction signal.

Subsystems on the train that can execute an operation instruction, feed back their own states, and perform interaction testing are collectively referred to as the instruction execution unit. After receiving the control instruction signal sent by the primary display terminal unit, the data synchronization control unit forwards the control instruction signal to the instruction execution unit, so that the instruction execution unit executes the control instruction signal and obtains the response data corresponding to the control instruction signal.

It should be noted that in order to ensure the execution speed of the control instruction signal, the data synchronization control unit, after receiving the control instruction signal sent by the primary display terminal unit, may send the control instruction signal to each of the secondary display terminal units and the instruction execution unit simultaneously, so that the instruction execution unit can receive the control instruction signal as soon as possible.

In some embodiments, the instruction execution unit includes a braking system, a traction system, and a high-voltage system. Each of the above systems is configured to execute the control instruction signal sent by the primary display terminal unit and execute a corresponding control instruction.

The data synchronization control unit is further configured to receive the response data sent by the instruction execution unit and send the response data to the multiple display terminal units.

After the instruction execution unit sends the response data corresponding to the control instruction signal, the data synchronization control unit may receive the response data sent by the instruction execution unit and send the response data to the multiple display terminal units, in order to enable the multiple display terminal units to receive the response data synchronously.

It should be noted that in order for successful interaction between the data synchronization control unit and the instruction execution unit, the data synchronization control unit is provided with a control process software module corresponding to the instruction execution unit, such as a traction test interaction module and a braking test interaction module.

The transmission channel for data transmission is provided between the multiple display terminal units and the data synchronization control unit. In some embodiments, a transmission medium of the transmission channel includes Ethernet, a multifunction vehicle bus (MVB), or a wireless mobile hotspot (Wi-Fi). The transmission medium may be determined based on the requirements of a transmission capacity and a transmission speed.

In some embodiments, in order to ensure the reliability of the data transmission of the data synchronization system, the multiple display terminal units and the instruction execution unit are further configured to: send respective life signals of the multiple display terminal units and the instruction execution unit to the data synchronization control unit after the train is powered on. The data synchronization control unit is further configured to send a life signal of the data synchronization control unit to each of the multiple display terminal units and the instruction execution unit after the train is powered on.

In order to ensure normal communication between the data synchronization unit, the multiple display terminal units and the instruction execution unit on the train, after the train is powered on, the multiple display terminal units and the instruction execution unit may send their respective life signals to the data synchronization unit, and the data synchronization unit may send its own life signal to each of the multiple display terminal units and the instruction execution unit, to determine whether the data transmission of the data synchronization system for the train is normal, thereby ensuring the reliability of the data transmission of the data synchronization system.

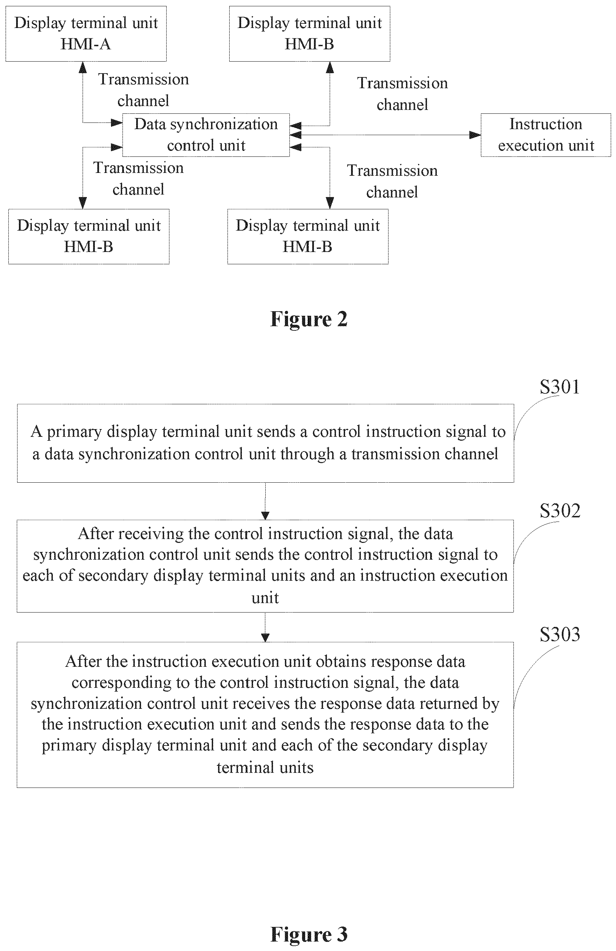

The data synchronization system for a train according to the present disclosure is described with reference to a specific embodiment of the data synchronization system. Reference is made to Figure 2, which is a topology diagram of a data synchronization system for a train according to an embodiment of the present disclosure.

Currently, the train generally has eight carriages. The activation end of the train may be switched during the travelling of the train, and thus the train is provided with four display terminal units. Among the four display terminal units, a primary display terminal unit for performing a primary control operation is HMI-A, and secondary display terminal units that do not perform the primary control operation are HMI-B. Both HMI-A and HMI-B communicate with the data synchronization control unit through the transmission channel, and the data synchronization control unit communicates with the instruction execution unit. The data synchronization control unit is introduced in the present disclosure, so that relevant operations, test information, and fault information are synchronized between HMI-A and HMI-B of the train. The data synchronization control unit may be formed by a change of software, that is, the data synchronization among the multiple display terminal units on the train can be achieved by a minor change on bus data transmission and software level of the train.

In summary, for the problem that the relevant operation, test information, and fault information of the display terminal for performing the primary control operation cannot be transmitted to an auxiliary monitoring screen, the data synchronization system for a train is provided according to the embodiments of the present disclosure. The system includes multiple display terminal units, the instruction execution unit, the data synchronization control unit and the transmission channel. The multiple display terminal units include one primary display terminal unit and multiple secondary display terminal units. The primary display terminal unit is configured to send a control instruction and display data. Each of the multiple secondary display terminal units is configured to display data. The data synchronization control unit is configured to receive the control instruction sent by the primary display terminal unit and send a control instruction signal to each of the secondary display terminal units, to achieve synchronization of the control instruction signal. The instruction execution unit is configured to receive the control instruction signal forwarded by the data synchronization control unit, execute the control instruction signal, and obtain response data corresponding to the control instruction signal. The data synchronization control unit is further configured to receive the response data sent by the instruction execution unit and send the response data to each of the multiple display terminal units, to achieve synchronization of the response data. The data synchronization control unit is introduced, achieving data synchronization between the primary display terminal unit and the multiple secondary display terminal units.

A data synchronization method for a train according to an embodiment of the present disclosure is described with reference to an embodiment hereinafter. Reference is made to Figure 3, which is a flow chart for a data synchronization system for a train according to an embodiment of the present disclosure. The method includes the following steps S301 to S3 03.

In step S301, a primary display terminal unit sends a control instruction signal to a data synchronization control unit through a transmission channel.

As described above, as a primary unit for human-machine interaction of the train, the primary display terminal unit may generate the control instruction signal and transmit the control instruction signal to the data synchronization control unit.

In step S302, after receiving the control instruction signal, the data synchronization control unit sends the control instruction signal to each of secondary display terminal units and an instruction execution unit.

After receiving the control instruction signal sent by the primary display terminal unit, the data synchronization control unit synchronously sends the control instruction signal to the secondary display terminal units.

The data synchronization control unit may further forward the control instruction signal to the instruction execution unit, so that the instruction execution unit may execute a corresponding instruction.

In step S303, after the instruction execution unit obtains response data corresponding to the control instruction signal, the data synchronization control unit receives the response data returned by the instruction execution unit and sends the response data to the primary display terminal unit and each of the secondary display terminal units.

After the instruction execution unit obtains the response data corresponding to the control instruction signal, for the data synchronization, the data synchronization control unit receives the response data sent by the instruction execution unit and sends the response data to the primary display terminal unit and the secondary display terminal units synchronously, thereby achieving the data synchronization of the train.

In some embodiments, after the primary display terminal unit sends the control instruction signal to the data synchronization control unit through the transmission channel, the control instruction signal may be displayed on an interface of the primary display terminal unit in order to facilitate workers on the train to directly obtain corresponding data.

It should be noted that the primary display terminal unit may synchronously and directly display the control instruction signal, that is, a display interface of the primary display terminal unit may display an interface change caused by executing the control instruction signal, in order to reduce visual lag of operation and display on the interface of the display terminal caused by a network transmission delay.

After the data synchronization control unit sends the control instruction signals to each of the secondary display terminal units, the control instruction signal may be displayed on an interface of the secondary display terminal unit.

After the data synchronization control unit receives the response data returned by the instruction execution unit and sends the response data to the primary display terminal unit and each of the secondary display terminal units, the response data may be displayed on the interface of the primary display terminal unit and the interface of each of the secondary display terminal units.

In some embodiments, in order to ensure normal data communication between the data synchronization control unit and the multiple display terminal units, before the primary display terminal unit sends the control instruction signal to the data synchronization control unit through the transmission channel, the method further includes the following steps: sending, by the primary display terminal unit, each of the secondary display terminal units, and the instruction execution unit, respective life signals to the data synchronization control unit through the transmission channel, and sending, by the data synchronization control unit, a life signal of the data synchronization control unit to each of the primary display terminal unit, the secondary display terminal units, and the instruction execution unit.

After the train is powered on, the primary display terminal unit, each of the secondary display terminal units, and the instruction execution unit send their respective life signals to the data synchronization control unit, and the data synchronization control unit sends its own life signal to the primary display terminal unit, each of the secondary display terminal units, and the instruction execution unit. In a case that both parties can receive constantly changing life signals sent by the other party, it indicates that the communication between the devices in the data synchronization system is stable, and the devices can normally communicate with each other.

In some embodiments, in a case that the primary display terminal unit and each of the secondary display terminal units normally communicate with the data synchronization control unit, the method further includes the following step: sending, by the primary display terminal unit, a primary display signal to the data synchronization control unit, and sending, by each of the secondary display terminal units, a secondary display signal to the data synchronization control unit.

The primary display terminal unit sends the primary display signal to the data synchronization control unit, and each of the secondary display terminal units sends the secondary display signal to the data synchronization control unit, so that the data synchronization control unit synchronously returns the primary display signal and secondary display signals sent by all the display terminal units to all the display terminal units, and thereby can correctly determine the primary display terminal unit from the multiple display terminal units on the train.

It should be noted that the data synchronization control unit is connected to only one primary control display terminal unit in order to ensure that a control system of the train is not chaotic. Normally, the primary control display terminal unit is a left display screen arranged in the cab at the activation end of the train, and the remaining display terminal units of the train are the secondary display terminal units. In practical use of the train, according to the configuration requirements, the primary display terminal unit has a function of sending the control instruction signal and displaying data, and each of the secondary display terminal units only has a function of displaying data. The function of sending the control instruction signal is locked for the secondary display terminal units.

In some embodiments, in a case that the data synchronization control unit receives no life signal from the primary display terminal unit, and receives life signals from the multiple secondary display terminal units, the method further includes the following step: determining, by the data synchronization control unit, one of multiple normal secondary display terminal units as a second primary display terminal unit, so that the second primary display terminal unit performs the functions of the primary display terminal unit, and the primary display terminal unit performs the function of the secondary display terminal units. The multiple normal secondary display terminal units are secondary display terminal units capable of communicating with the data synchronization control unit.

In a case that the data synchronization control unit fails to receive life signal from the primary display terminal unit but receives the life signals from the multiple secondary display terminal units, it indicates that the communication between the primary display terminal unit and the data synchronization control unit is abnormal, and the train includes secondary display terminal units that normally communicates with the data synchronization control unit. In such case, the data synchronization control unit determines one of the multiple normal secondary display terminal units as the second primary display terminal unit, for the second primary display terminal unit to perform the functions of the primary display terminal unit, that is, sending the control command signal and displaying data. Even if the primary display terminal unit resumes normal communication, the primary display terminal unit still performs the function of the secondary display terminal unit, so that there is no primary-secondary switching or rotation, thereby avoiding affecting data states.

It should be noted that the data synchronization control unit normally determine a secondary display control unit that is arranged at a same end (i.e. at the same activation end) of the train with the primary display terminal unit as the second primary display terminal unit, so that workers in the cab at the activation end of the train can still interact with the second primary display terminal unit.

In some embodiments, after determining, by the data synchronization control unit, one of the multiple normal secondary display terminal units as the second primary display terminal unit, the method further includes the following step: sending, by the second primary display terminal unit, the primary display signal to the data synchronization control unit, and sending, by each of the primary display terminal unit and the secondary display terminal units, the secondary display signal to the data synchronization control unit.

In a case that the communication between the primary display terminal unit and the data synchronization control unit is abnormal, the data synchronization control unit can only receive the secondary display signals sent by the secondary display terminal units. After determining the second primary display terminal unit, the data synchronization control unit may send a specified primary display signal to the second primary display terminal unit, so that the second primary display terminal unit can send the primary display signal to the data synchronization control unit, while other secondary display terminal units still send the secondary display signals to the data synchronization control unit.

In summary, the data synchronization method for a train is provided according to the present disclosure, so that test information, control information, fault information and other information are synchronously displayed on the multiple display terminal units of the train, providing convenience for relevant workers on the train to view data on different display terminal units. Moreover, relevant experimental information obtained previously can be retained when the activation end of the train is switched, saving corresponding human resources.

An electronic device is provided according to another embodiment of the present disclosure. The electronic device includes a memory and a processor. The memory is configured to store executable instructions. The processor, when executing the executable instructions stored in the memory, perform the data synchronization method for a train according to the embodiments of the present disclosure.

A computer-readable medium is provided according to another embodiment of the present disclosure. The computer-readable medium stores executable instructions. The executable instructions, when executed by a processor, perform the data synchronization method for a train according to the embodiments of the present disclosure.

Those skilled in the art may further appreciate that the units and algorithmic steps in the examples described according to the embodiments disclosed herein may be implemented in forms of electronic hardware, computer software or a combination of the both. In order to illustrate the interchangeability of the hardware and the software clearly, the components and the steps in the examples are described generally according to functions in the above description. Whether these functions are performed in hardware or software depends on the specific application and design constraints for the technical solution. Those skilled in the art may use different methods to implement the described functions for each specific application, and such implementation should not be regarded as going beyond the scope of the present disclosure.

Based on the above description of the disclosed embodiments, those skilled in the art can implement or practice the present disclosure. Various modifications to the embodiments are apparent to those skilled in the art. The general principles defined in the present disclosure may be implemented in other embodiments without departing from the spirit or scope of the present disclosure. Therefore, the present disclosure is not limited to the embodiments described herein, but conforms to the widest scope consistent with the principle and novel features disclosed herein.

## Claims

1. A data synchronization system for a train, comprising: a plurality of display terminal units, an instruction execution unit, a data synchronization control unit and a transmission channel, wherein
the plurality of display terminal units comprise one primary display terminal unit and a plurality of secondary display terminal units, the primary display terminal unit is configured to send a control instruction and display data, and each of the plurality of secondary display terminal units is configured to display data;
the data synchronization control unit is configured to: perform data transmission with the plurality of display terminal units through the transmission channel, receive a control instruction signal sent by the primary display terminal unit and send the control instruction signal to each of the plurality of secondary display terminal units; and
the instruction execution unit is configured to receive the control instruction signal forwarded by the data synchronization control unit, execute the control instruction signal, and obtain response data corresponding to the control instruction signal,
wherein the data synchronization control unit is further configured to: receive the response data sent by the instruction execution unit and send the response data to the plurality of display terminal units.

2. The system according to claim 1, wherein
the plurality of display terminal units and the instruction execution unit are further configured to send respective life signals to the data synchronization control unit after the train is powered on; and
the data synchronization control unit is further configured to send a life signal of the data synchronization control unit to each of the plurality of display terminal units and the instruction execution unit after the train is powered on.

3. The system according to claim 1, wherein a transmission medium of the transmission channel comprises Ethernet, a multifunction vehicle bus, MVB, or wireless mobile hotspot Wi-Fi.

4. The system according to claim 1, wherein the instruction execution unit comprises a braking system, a traction system, and a high-voltage system.

5. A data synchronization method for a train, comprising:
sending, by a primary display terminal unit, a control instruction signal to a data synchronization control unit through a transmission channel;
sending, by the data synchronization control unit after receiving the control instruction signal, the control instruction signal to each of secondary display terminal units and an instruction execution unit; and
receiving, by the data synchronization control unit after the instruction execution unit obtains response data corresponding to the control instruction signal, the response data returned by the instruction execution unit, and sending, by the data synchronization control unit, the response data to the primary display terminal unit and each of the secondary display terminal units.

6. The method according to claim 5, wherein
after sending, by the primary display terminal unit, the control instruction signal to the data synchronization control unit through the transmission channel, the method further comprises: displaying the control instruction signal on an interface of the primary display terminal unit;
after sending, by the data synchronization control unit, the control instruction signal to each of secondary display terminal units, the method further comprises: displaying the control instruction signal on an interface of the secondary display terminal unit; and
after receiving, by the data synchronization control unit, the response data returned by the instruction execution unit, and sending, by the data synchronization control unit, the response data to the primary display terminal unit and each of the secondary display terminal units, the method further comprises: displaying the response data on the interface of the primary display terminal unit and the interface of each of the secondary display terminal units.

7. The method according to claim 5, wherein before sending, by the primary display terminal unit, the control instruction signal to the data synchronization control unit through the transmission channel, the method further comprises:
sending, by the primary display terminal unit, each of the secondary display terminal units, and the instruction execution unit, respective life signals to the data synchronization control unit through the transmission channel; and
sending, by the data synchronization control unit, a life signal of the data synchronization control unit to each of the primary display terminal unit, the secondary display terminal units, and the instruction execution unit.

8. The method according to claim 7, wherein in a case that the primary display terminal unit and each of the secondary display terminal units normally communicate with the data synchronization control unit, the method further comprises:
sending, by the primary display terminal unit, a primary display signal to the data synchronization control unit, and sending, by each of the secondary display terminal units, a secondary display signal to the data synchronization control unit.

9. The method according to claim 7, wherein in a case that the data synchronization control unit receives no life signal from the primary display terminal unit, and receives life signals from a plurality of secondary display terminal units, the method further comprises:
determining, by the data synchronization control unit, one of a plurality of normal secondary display terminal units as a second primary display terminal unit,
wherein the second primary display terminal unit performs functions of the primary display terminal unit, the primary display terminal unit performs a function of the secondary display terminal unit, and the plurality of normal secondary display terminal units are secondary display terminal units capable of communicating with the data synchronization control unit.

10. The method according to claim 9, wherein after the determining, by the data synchronization control unit, one of the plurality of normal secondary display terminal units as the second primary display terminal unit, the method further comprises:
sending, by the second primary display terminal unit, the primary display signal to the data synchronization control unit, and sending, by each of the primary display terminal unit and the secondary display terminal units, the secondary display signal to the data synchronization control unit.
